# EUROPÄISCHE PATENTANMELDUNG

(11) **EP 2 333 451 A2**
(43) Veröffentlichungstag der Anmeldung: **15.06.2011**
(21) Anmeldenummer: 10015520.9
(22) Anmeldetag: 10.12.2010
(51) Int. Cl.: F24J 2/10, F24J 2/14, F24J 2/52

(54) **Tragmodul für ein Spiegelsystem**

(30) Priorität: 11.12.2009 DE 102009057911
(71) Anmelder: fischer eco solutions GmbH, 77855 Achern-Fautenbach (DE)
(72) Erfinder: Fischer, Hans, 77889 Seebach (DE)
(74) Vertreter: Gesthuysen, von Rohr & Eggert

(57) **Zusammenfassung**

Beschrieben und dargestellt ist ein Tragmodul (1) für ein Spiegelsystem. Ein Tragmodul für ein Spiegelsystem, das sehr einfach zu fertigen ist und eine hohe Maßgenauigkeit aufweist, wird dabei realisiert, indem mindestens ein hohler Längsträger (2) und mindestens ein Stützelement (3) von dem Tragelement (1) umfasst sind, wobei das Stützelement (3) auf den Längsträgers (2) aufgeschoben und durch plastisches Verformen wenigstens eines Abschnitts (4) einer Wand (5) des Längsträgers (2) im Bereich des Stützelements (3) zumindest kraftschlüssig an dem Längsträger (2) befestigt ist.

## Beschreibung

Die Erfindung betrifft ein Tragmodul für ein Spiegelsystem eines solarthemischen Kraftwerkes, insbesondere eines solarthermischen Kraftwerks mit sogenannten Fresnel-Spiegel-Kollektoren.

Auf derartigen Tragmodulen sind Reflektorflächen - beispielsweise Spiegel - montierbar, die einfallendes Sonnenlicht auf einen Absorber, beispielsweise in Form eines Absorberrohrs, bündeln. Innerhalb des Absorbers wird ein fließfähiges Medium erhitzt, das anschließend z. B, zur Dampferzeugung in einem Kessel verwendet wird. Mit dem erzeugten Dampf wird eine herkömmliche Dampfturbine beaufschlagt, die einen Generator zur Stromerzeugung antreibt.

Bei Fresnel-Spiegel-Kollektoren wird das Sonnenlicht über ein Spiegelsystem aus mehreren in einer Ebene angeordneter paralleler Reflektorflächen bzw. Spiegelstreifen nach dem Prinzip einer Fresnel-Linse auf ein Absorberrohr gebündelt. Die Tragmodule mit den Reflektorflächen werden im Tagesverlauf dabei einachsig dem Stand der Sonne nachgeführt, so dass stets eine optimale Reflexion der einfallenden Sonnenstrahlen auf den Absorber erfolgt. Die Tragmodule bestehen dabei üblicherweise aus einer Schweißkonstruktion, an der die Reflektorflächen befestigt sind.

Die aus dem Stand der Technik bekannten Tragmodule weisen - als Schweißkonstruktionen - den Nachteil auf, dass ihre Herstellung durch eine Vielzahl von Schweißnähten sehr aufwendig ist, wobei zusätzlich die Herausforderung besteht, die Schweißkonstruktion mit einer hohen Genauigkeit bezüglich der Maßhaltigkeit zu fertigen, da für Fresnel-Systeme, als optische Systeme, eine sehr hohe Genauigkeit erforderlich ist. Dabei haben sich in der Vergangenheit insbesondere Maßabweichungen aufgrund von Verzug der Tragkonstruktiou durch Schweißeigenspannung als problematisch herausgestellt. Schon geringste Ungenauigkeiten können dazu führen, dass ein wesentlicher Teil der einfallenden Sonnenstrahlen nicht exakt auf den Absorber reflektiert wird, wodurch sich der Wirkungsgrad der Anlage reduziert.

Der vorliegenden Erfindung liegt daher die Aufgabe zugrunde, ein Tragmodul für ein Spiegelsystem anzugeben, das sehr einfach zu fertigen ist und eine hohe Maßgenauigkeit aufweist.

Die vorgenannte Aufgabe ist bei einem Tragmodul für ein Spiegelsystem gelöst, indem das Tragmodul mindestens einen hohlen Längsträger und mindestens ein Stützelement umfasst, wobei das Stützelement auf den Längsträger aufgeschoben und durch plastisches Verformen wenigstens eines Abschnitts einer Wand des Längsträgers im Bereich des Stützelements zumindest kraftschlüssig an dem Längsträger befestigt ist. Das Stützelement wird folglich an dem Längsträger befestigt, indem es zunächst auf den Längsträger aufgeschoben und relativ zum Längsträger exakt positioniert wird. Nachdem das Stützelement positioniert ist, wird der Längsträger wenigstens in dem Abschnitt, in dem das Stützelement angeordnet ist, derart plastisch verformt, dass zumindest eine kraftschlüssige Verbindung zwischen dem Stützelement und dem Längsträger entsteht, so dass das Stützelement sowohl drehfest als auch in axiale Richtung unbeweglich auf dem Längsträger befestigt ist. Als besonders vorteilhaft hat sich dabei herausgestellt, wenn der Längsträger eine Ebene des Stützelements im Wesentlichen als Normale durchtritt, so dass das Stützelement senkrecht zu dem Längsträger angeordnet ist.

Dadurch, dass auf einen Wärmeeintrag in das Material wie beim Schweißen verzichtet werden kann, entstehen keine aus Wärmeeintrag resultierende Eigenspannungen im Material, so dass ein Verzug des Tragmoduls, nach der Befestigung des Stützelements an dem Längsträger, ausgeschlossen ist, Die Fertigung des Tragmoduls ist somit mit einer sehr hohen Maßgenauigkeit möglich, wodurch auf eine Nachbearbeitung, beispielsweise ein erneutes Richten des Tragmoduls, verzichtet werden kann, Bereits geringe Ungenauigkeiten bei der Herstellung des Tragmoduls fuhren später zu einer Reduzierung des Anteils der Sonnenstrahlung, die auf das Absorberrohr reflektiert wird. Als Material für sämtliche Bauteile des Tragmoduls, insbesondere aber für die Längsträger und Stützelemente, eignet sich ein rostfreier Stahl,

Um das Gewicht des Tragmoduls zu reduzieren und gleichzeitig eine gute Stabilität zu gewährleisten, ist gemäß einer Weiterbildung des Tragmoduls vorgesehen, dass das Stützelement als Blechplatte realisiert ist. Das Stützelement bzw. die Blechplatte weist eine Ausnehmung auf, die der Außenkontur des Längsträgers entspricht, so dass das Stützelement auf den noch unverformten Längsträger aufschiebbar ist und die Blechplatte von dem Längsträger im wesentlichen senkrecht durchtreten wird. Das Stützelement kann dabei auf einfache Weise durch Ausstanzen einer Blechplatte hergestellt werden, wobei die Blechplatte eine beliebige Form aufweisen kann. Beispielsweise ist der Teil der Blechplatte, auf dem später ein Spiegelstreifen oder eine Reflektorfläche befestigt wird, mit einer geringfügigen Wölbung versehen, beispielsweise mit einer Wölbung, die den Krümmungsradius eines zu tragenden Spiegelelements aufweist, z.B. einen Radius von etwa 20 Meter.

Das Verbinden der Blechplatte mit dem Längsträger erfolgt derart, dass beispielsweise die Außenkontur des Längsträgers durch plastische Verformung aufgeweitet wird, so dass der Längsträger in der Ausnehmung der Blechplatte verklemmt wird und zumindest kraftschlüssig mit der Blechplatte verbunden ist. Wenn die Außenkontur des Längsträgers derart plastisch verformt wird, dass sich die Außenkontur des Längsträgers rechts und links von der Blechplatte über die Ausnehmung hinauswölbt, so kann zusätzlich zu der kraftschlüssigen Verbindung eine formschlüssige Verbindung hergestellt werden, die eine zusätzliche axiale Fixierung der Blechplatte auf dem Längsträger bewirkt.

Um neben der formschlüssigen Verbindung für die axiale Fixierung eine formschlüssige Verbindung zwischen dem Stützelement und dem Längsträger zu schaffen, die eine besondere Drehfestigkeit des Stützelements auf dem Längsträger gewährleistet, ist gemäß einer bevorzugten Ausgestaltung vorgesehen, dass der Innenumfang der Ausnehmung in dem Stützelement bzw. in der Blechplatte ein Profil aufweist, insbesondere ein zahnförmiges oder wellenförmiges Profil. Durch die profilierte Ausnehmung in dem Stützelement bzw. in der Blechplatte formt sich die Wand des Längsträgers mit ihrer Außenkontur während der plastischen Verformung an das Profil der Ausnehmung an, so dass sich wenigstens eine Wand des Längsträgers mit dem Profil, also der Innenkontur der Ausnehmung, verzahnt.

Das Profil weist dabei eine beliebige Form auf, sollte jedoch derart ausgestaltet sein, dass eine Verzahnung wenigstens einer Wand des Längsträgers mit dem Profil der Ausnehmung möglich ist. Als besonders vorteilhaft haben sich dabei zahnförmige Profile mit zackenartigen Zähnen oder wellenförmige Profile herausgestellt. Das Profil muss dabei nicht am gesamten Innenumfang der Ausnehmung vorgesehen sein, sondern kann auch Abschnittsweise am Innenumfang ausgebildet sein.

Gemäß einer bevorzugten Weiterbildung der vorliegenden Erfindung ist weiterhin vorgesehen, dass der Längsträger ein Rohr ist, insbesondere einen kreisrunden Querschnitt aufweist. Das Stützelement - die Blechplatte - weist dabei eine kreisrunde Ausnehmung auf, so dass es einfach auf das Rohr aufschiebbar ist. Nach der Positionierung des Stützelements relativ zum Rohr bzw. auf dem Rohr wird der Umfang des Rohres zumindest an der Stelle aufgeweitet, an der sich das Stützelement befindet, so dass sich die aufgeweitete Wand des Längsträgers an den Innenumfang der Ausnehmung in dem Stützelement anlegt und dabei eine zumindest kraftschlüssige Verbindung zwischen dem Rohr und dem Stützelement entsteht.

Ein gleichmäßiges Antennen der Außenkontur des Längsträgers an die Ausnehmung des Stützelements wird gemäß einer bevorzugten Ausgestaltung dadurch gewährleistet, dass das plastische Verformen zur Befestigung des Stützelements an dem Längsträger durch einen inneren Überdruck im Hohlraum des Längsträgers erfolgt. Der Hohlraums des bevorzugt als Rohr ausgestalteten Längsträgers wird dazu - zumindest teilweise - mit einem Druckfluid gefüllt, das unter einem sehr hohen Druck steht, so dass sich der Außenumfang des Längsträgers überall dort aufweitet, wo der hohe Druck des Fluids herrscht, wobei durch die Verformung eine zumindest kraftschlüssige Verbindung mit wenigstens einem Stützelement entsteht. Wie zuvor bereits beschrieben, kann die Aufweitung des Außenumfangs derart weit erfolgen, dass zusätzlich eine formschlüssige Verbindung entsteht, die ein axiales Verschieben der Stützplatte relativ zum Längsträger verhindert.

Um die Verbindung zwischen Längsträger und Stützelement sehr definiert und lokal zu realisieren, ist gemäß einer weiteren Ausgestaltung vorgesehen, dass der Hohlraum des Längsträgers lediglich partiell, an den zu verformenden Abschnitten, mit einem inneren Überdruck beaufschlagt wird, insbesondere mit einer Lanze, die jeweils rechts und links von dem zu verformenden Abschnitt ein Dichtmittel aufweist. In den Hohlraum des Längsträgers wird dazu die Lanze eingebracht, die innerhalb des Hohlraums einen zuvor definierten Abschnitt abdichtet, der dabei dem zu verformenden Abschnitt entspricht. Die Lanze mit den Dichtmitteln und die Wand des Längsträgers bilden einen Hohlraum. Dieser zwischen Lanze und Längsträger entstehende Hohlraum wird anschließend mit dem unter Druck stehenden Fluid gefüllt, so dass sich lediglich der Abschnitt des Längsträgers umfänglich aufweitet, der zuvor von der Lanze definiert worden ist. Dabei ist vorzugsweise vorgesehen, zuvor das Stützelement in genau diesem Bereich auf dem Außenumfang in einer exakt definierten Position relativ zum Längsträger zu positionieren, so dass durch die lokale Verformung eine zumindest kraftschlüssige Verbindung zwischen dem Längsträger und dem Stützelement entsteht.

Um den Grad und/oder die Form der Verformung der Wand oder der Wände des Längsträgers vorab zu definieren, ist bevorzugt zusätzlich vorgesehen, dass während des Verformvorganges jeweils rechts und links von dem Stützelement den Längsträger vollständig umschließende Niederhalter angeordnet sind, die zum einen eine exakte Position des Stützelementes in axialer Richtung auf dem Längsträger festlegen und zum anderen eine umlaufende Ausformung definieren, an die sich die Wand oder die Wände des Längsträger durch den inneren Überdruck anlegen können, so dass sich nach der Verformung eine definierte Außenkontur des verformten Abschnitts ergibt, die im wesentlichen dem Negativ der Form der Ausformung in den Niederhaltern entspricht.
Dabei ist die Form der Ausformungen innerhalb der Niederhalter beispielsweise so ausgestaltet, dass sich die Wand des Längsträgers rechts und links von dem Stützelement nach der Verformung etwas über die Ausnehmung erhebt, so dass zusätzlich eine formschlüssige Verbindung gewährleistet ist, die eine axiale Verschiebung des Stützelements auf dem Längsträger verhindex-t, Falls die Ausnehmung im Stützelement bzw. der Blechplatte zusätzlich ein Profil aufweist, wird durch die Verformung selbstverständlich auch eine drehfeste formschlüssige Verbindung ausgebildet.

Um mit einem Tragmodul einen vollständigen Reflektor herzustellen, ist gemäß einer weiteren Ausgestaltung vorgesehen, dass wenigstens ein Spiegel oder ein Spiegelsystem oder eine beliebige Reflektorfläche umfasst ist, insbesondere der Spiegel oder die Reflektorfläche an dem Stützelement befestigt ist. Der Spiegel ist dazu an mindestens einem Stützelement befestigt, bevorzugt mit dem Stützelement verklebt, so dass das Tragmodul eine zuverlässige Stützkonstruktion für den Spiegel oder das Spiegelsystem darstellt. Für den Fall, dass das Stützelement als Blechplatte ausgebildet ist, kann wahlweise auf der Kante im Kontaktbereich mit dem Spiegel ein Trägerblech an der Blechplatte befestigt sein, um die Auflagefläche bzw. die Befestigungsfläche für den Spiegel zu vergrößern.

Um das Tragmodul im Bezug auf die Sonne auszurichten, ist gemäß einer bevorzugten Ausgestaltung vorgesehen, dass der Längsträger um seine Längsachse schwenkbar gelagert ist. Durch die schwenkbare Lagerung kann das Tragmodul, beispielsweise mit einem darauf befestigten Spiegel, dem Sonnenstand nachgeführt werden, so dass stets eine optimale Reflexion der Sonnenstrahlen in Richtung des Absorberrohrs gewährleistet ist. Um das Schwenken zu ermöglichen, ist der Längsträger beispielsweise von einem Stellmotor direkt oder indirekt angetrieben; die Lagerung der Längsachse erfolgt beispielsweise auf Kunststoffrollen, Für den Fall, dass der Längsträger asymmetrisch in dem Tragmodul angeordnet ist oder es sinnvoll erscheint, dass das Tragmodul um eine andere Längsachse schwenkbar gelagert ist, ist selbstver-ständlich auch eine Schwenkbarkeit um eine andere Achse realisierbar.

Damit eine zuverlässige Befestigung eines Spiegels auf dem Tragmodul möglich ist, ist gemäß einer vorteilhaften Ausgestaltung vorgesehen, dass mindestens zwei Stützelemente vorhanden sind, insbesondere die Stützelemente parallel zueinander ausgerichtet sind. Die Stützelemente sind dazu nacheinander auf dem Längsträger angeordnet und durch plastische Verformung mittels Innenhochdrucks befestigt. Durch die beabstandeten Stützelemente auf dem Längsträger wird der Spiegel gleichmäßig abgestützt. Bei sehr großen oder sehr langen Spiegeln ist zusätzlich auch vorgesehen, dass eine beliebige Mehrzahl von Stützelementen auf dem Längsträger angeordnet und an diesem befestigt ist, so dass eine regelmäßige und gleichmäßige Abstützung des Spiegels durch die Stützelemente sichergestellt ist. Ein bevorzugter Abstand zwischen den Stützelementen beträgt dabei etwa 50 bis 80 Zentimeter, ein Tragmodul hat etwa eine Länge von 6 m.

Um den Stützelementen untereinander eine zusätzliche Stabilität zu verleihen, ist vorgesehen, dass die Stützelementen in wenigstens einem Seitenbereich mit einer, beispielsweise als Blechstreifen ausgestalteten, Seitenversteifung verbunden sind. Durch die Seitenversteifung werden die Flanken der Stützelemente unbeweglich, was der gesamten Konstruktion aus einem Längsträger und einer Mehrzahl von Stützelementen eine zusätzliche Stabilität verleiht. Vorzugsweise ist auf beiden Seiten der Stützelemente jeweils eine Seitenversteifung an den Flanken angebracht.

Eine zusätzliche Stabilität des Tragmoduls kann gemäß einer Weiterbildung des Tragmoduls realisiert werden, indem mindestens zwei Längsträger vorhanden sind, wobei das Stützelemente jeweils eine Anzahl von Ausnehmungen aufweist, die der Anzahl der Längsträger entspricht, insbesondere zusätzlich mindestens eine Drehlagerplatte an den Längsträgern befestigt ist. Dabei sind die Längsträger in ihrer Längsrichtung parallel zueinander angeordnet und durchtreten auch die Stützelemente jeweils parallel zueinander. Jeder Längsträger ist jeweils zumindest in dem Bereich plastisch verformt bzw. sein Umfang aufgeweitet, in dem er jeweils ein Stützelement durchtritt.

Eine drehbare Lagerung des Tragmoduls erfolgt dabei entweder um eine Mittelachse eines der beiden Längsträger oder um eine beliebige Achse. Für eine Schwenkbarkeit des Tragmoduls um eine beliebige Achse ist an den Längsträgern beispielsweise mindestens eine Drehlagerplatte befestigt. Die Drehlagerplatte ist derart ausgestaltet, dass das Tragmodul auf einer oder auf einer Mehrzahl von Drehlagerplatten gelagert ist und die Drehung auf den Lagerplatten erfolgt. Die Lagerplatten sind auf gleiche Art und Weise mit den Längsträger verbunden wie die Stützelemente. Das Schwenken bzw. Drehen des Tragmoduls erfolgt dann beispielsweise um eine Achse, die von der Außenkontur der Drehlagerplatten abhängig ist. Eine oder mehrere Drehlagerplatten können dabei beispielsweise von einem Motor angetrieben werden, so dass das Tragmodul automatisch schwenkbar ist. Zur präziseren Verstellbarkeit des Tragmoduls weisen die Drehlageiplatten beispielweise eine Verzahnung auf.

Bei sehr langen Absorberrohrleitungen hat sich ein System aus wenigstens zwei Tragmodulen als vorteilhaft erwiesen, bei dem die Tragmodule jeweils an einem Ende miteinander verbunden sind, indem insbesondere die Längsträger an jeweils einer Stirnseite miteinander verbunden sind, bevorzugt die Längsträger wenigstens kraftschlüssig miteinander verbunden sind, Durch das System aus Tragmodulen kann ein beliebig langer Reflektor geschaffen werden, der aus einer beliebigen Anzahl an Tragmodulen zusammengesetzt ist. Begrenzender Faktor ist dabei die Gesamtstabilität des Systems aus Tragmodulen, wobei bei einer gleichmäßigen Lagerung und einem gleichmäßigen Antrieb des Systems seiner axialen Erstreckung praktisch keine Grenze gesetzt ist.

Zur Verbindung der Tragmodule werden dabei im Wesentlichen die Längsträger miteinander verbunden, wobei es sich als vorteilhaft erwiesen hat, wenn die Längsträger wenigstens kraftschlüssig miteinander verbunden sind, beispielsweise dadurch, dass das Ende eines Längsträgers auf das Ende des nachfolgenden Längsträgers aufgeschrumpft wird. Auch bei der Verbindung der Längsträger kann eine Verbindung mittels Innenhochdruckumformen hergestellt werden, die beispielsweise auf der Baustelle hergestellt wird. Die auf den Tragmodulen befestigten Spiegel sind dabei so angeordnet, dass sie jeweils nur die Länge eines Tragmoduls überdecken, alternativ dazu werden die Spiegel erst nach dem Verbinden der Module angebracht, so dass die Spiegel mehrere Tragmodule überdecken können.

Eine weitere unabhängige Lehre der Erfindung betrifft ein Verfahren zur Herstellung eines Tragmoduls für ein Spiegelsystem, wobei das Tragmodul wenigstens einen Längsträger und mindestens ein Stützelement aufweist. Insbesondere eignet sich das Verfahren zur Herstellung eines der zuvor beschriebenen Tragmodule. Bei dem Verfahren wird zunächst mindestens ein Stützelement auf einen Längsträger aufgeschoben und auf dem Längsträger relativ zu dem Längsträger positioniert so dass nachfolgend der Hohlraum des Längsträgers - zumindest teilweise - mit einem hohen Innendruck beaufschlagt werden kann und eine Aufweitung des Längsträgers zumindest im Bereich des Stützelements erfolgt, wodurch eine zumindest kraftschlüssige Verbindung zwischen Längsträger und Stützelement entsteht.

Eine bevorzugte Ausgestaltung des Verfahrens sieht vor, dass der gesamte Hohlraum des Längsträgers mit einem inneren Überdruck beaufschlagt wird, wobei an der Außenseite des Längsträgers Niederhalter zur Beeinflussung der Verformung vorgesehen sind. Die Niederhalter definieren die Verformung des Längsträgers und begrenzen diese, so dass eine lokale Verformung des Längsträgers in den Bereichen zugelassen wird, in denen eine Verbindung mit jeweils einem Stützelement hergestellt werden soll.

Gemäß einer Weiterbildung des Verfahrens, die sich als besonders vorteilhaft herausgestellt hat, ist vorgesehen, dass der Hohlraum des Längsträgers lediglich partiell an den zu verformenden Abschnitten mit einem inneren Überdruck beaufschlagt wird, insbesondere mit einer Lanze, die jeweils rechts und links von dem zu verformenden Abschnitt ein Dichtmittel aufweist. In den Längsträger wird dazu die Lanze eingebracht, die innerhalb des Hohlraums einen zuvor definierten Abschnitt abdichtet, der dabei dem durch ein Druckfluid zu verformenden Abschnitt entspricht. Die Lanze mit den Dichtmitteln und die Wand des Längsträgers bilden einen Druckraum. Dieser zwischen Lanze und Längsträger entstehende Druckraum wird anschließend mit dem unter Druck stehenden Fluid gefüllt, so dass sich lediglich der Abschnitt des Längsträgers umfänglich aufweitet, der zuvor von der Lanze mit den Dichtmitteln definiert worden ist.

Eine letzte Weiterbildung des Verfahrens sieht vor, dass zunächst die Stützelemente ausgestanzt werden, insbesondere die Ausnehmung in den Stützelementen mit einem umlaufenden Profil durch Stanzen hergestellt wird. Dieser Verfahrensschritt eignet sich insbesondere bei Stützelementen, die aus einer Blechplatte hergestellt sind, da sich so eine Vielzahl von Stützelementen auf sehr einfache Weise mit einer sehr hohen Maßgenauigkeit herstellen lassen.

Im Einzelnen gibt es nun eine Vielzahl von Möglichkeiten, das erfindungsgemäße Tragmodul und das erfindungsgemäße Verfahren auszugestalten und weiterzubilden. Dazu wird verwiesen einerseits auf die den Patentansprüchen 1 und 11 nachgeordneten Patentansprüche, andererseits auf die folgende Beschreibung von Ausführungsbeispielen in Verbindung mit der Zeichnung. In der Zeichnung zeigen:
- Fig. 1: ein Ausiuhrungsbeispiel eines Systems aus einer Mehrzahl von Tragmodulen für ein Spiegelsystem in einer perspektivischen Ansicht,
- Fig. 2: ein Ausfühnmgsbeispiel eines Stützelements,
- Fig. 3: ein Ausführungsbeispiel eines Tragmoduls für ein Spiegelsystem in Seitenansicht und
- Fig. 4: ein verformter Abschnitt eines Längsträgers als Vergrößerung des Ausschnitts IV in Fig. 3.

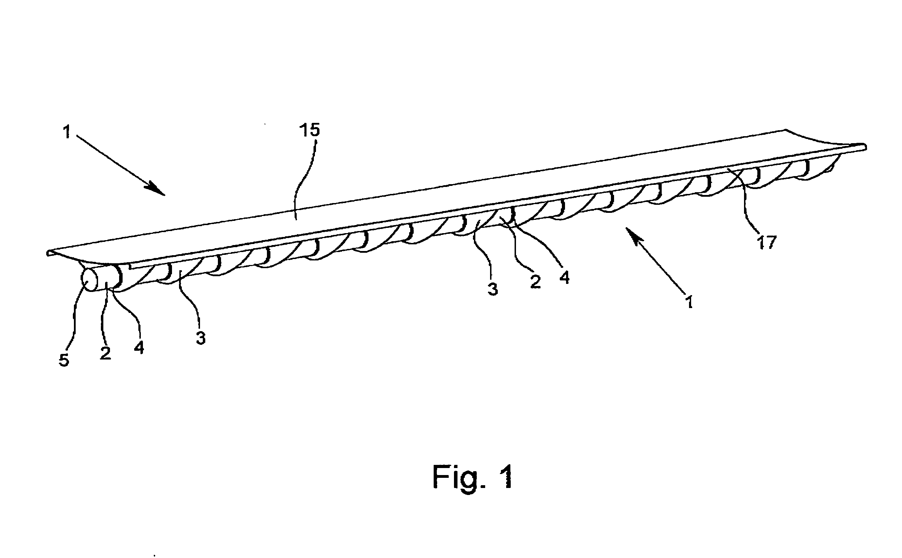

Fig. 1 zeigt ein System aus einer Mehrzahl von Tragmodulen 1- hier zwei Tragmodule 1- für ein Spiegelsystem mit einer Mehrzahl von hintereinander angeordneten und miteinander verbundenen hohlen Längsträ,gern 2, wobei in regelmäßigen Abständen auf den Längsträgern 2 Stützelemente 3 aufgeschoben und durch plastisches Verformen eines Abschnitts 4 einer Wand 5 der Längsträger 2 kraft- und formschlüssig verbunden sind. Der Umfang der Längsträger 2 ist dafür jeweils an den Stellen plastisch verformt, an denen jeweils ein Stützelement 3 auf dem Außenumfang angeordnet ist. Die Stützelemente 3 sind bei diesem Ausfiffirungsbeispiel als Blechplatten realisiert, die durch Stanzen hergestellt sind, wodurch nahezu eine beliebige Form für die Stützelemente 3 realisiert werden kann. Die Längsträger 2 sind verbunden, indem ein erster Längsträger 2 mit einem seiner Enden auf ein Ende eines zweiten Längsträgers 2 aufgeschrumpft ist.

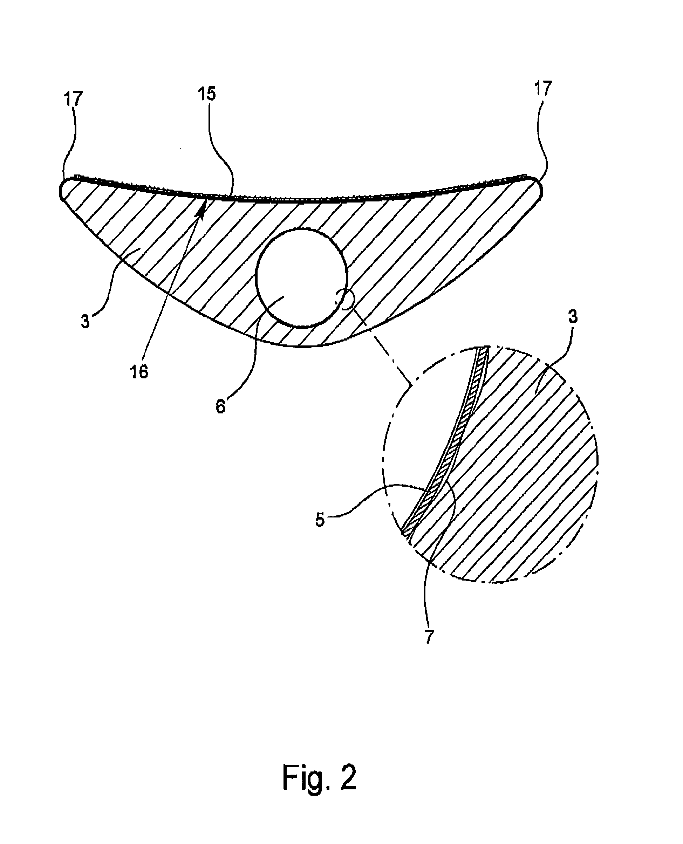

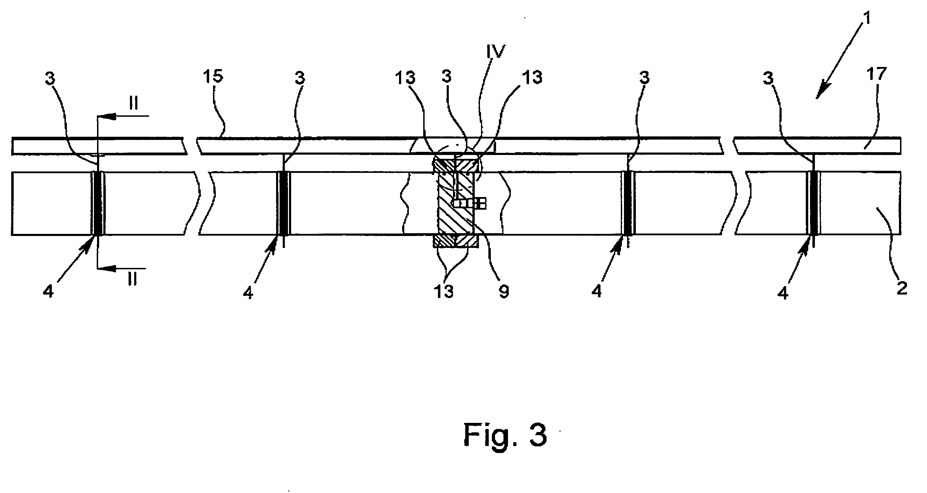

Fig. 2 zeigt ein als Blechplatte realisiertes Stützelement 3 als Schnitt gemäß II - II in Fig. 3 in einer Seitenansicht. Das Stützelement 3 ist durch Stanzen hergestellt und weist eine Ausnehmung 6 auf. Die Form der Ausnehmung 6 entspricht der Außenkontur des Längsträgers 2, wobei der Längsträger 2 durch die Ausnehmung 6 hindurchgeführt ist und in der Ausnehmung 6 durch plastische Verformung mittels Innenhochdruck verformt und so befestigt ist. Die vergrößerte Darstellung in Fig. 2 zeigt einen Ausschnitt des Innenumfangs 7 der Ausnehmung 6 im Stützelement 3, wobei der Innenumfang 7 ein wellenförmiges Profil aufweist. Das wellenförmige Profil ist mit der Wand 5 des Längsträgers 2 durch die plastische Verformung der Wand 5 des Längsträgers 2 derart verzahnt, dass eine drehfeste kraft- und formschlüssige Verbindung zwischen dem Längsträger 2 und dem Stützelement 3 realisiert ist. Die Wand 5 ist bei diesem Ausführungsbeispiel nicht so stark verformt worden, dass sie sich vollständig an das Profil 7 angelegt hat, wodurch kleine Freiräume jeweils in den Wellentälern des Profils verbleiben. Zur Übertragung eines größeren Drehmoments ist bei anderen Ausführungsbeispielen auch vorgesehen, dass die Wand 5 derart verformt wird, dass sie sich vollständig an das Profil anlegt und keine Freiräume zwischen dem Profil und der Wand 5 verbleiben.

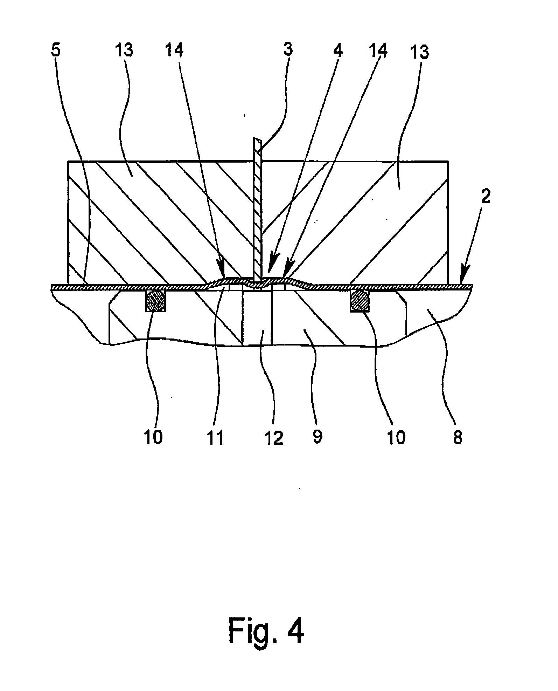

Die Verbindung zwischen dem Längsträger 2 und den Stützelementen 3 wird jeweils durch lokales plastisches Verformen der Wand 5 des Längsträgers 2 hergestellt. Fig. 4 zeigt, als Vergrößerung des Bereichs IV in der Fig. 3, eine temporär in den Hohlraum 8 des Längsträgers 2 eingebrachte Lanze 9. Die Lanze 9 im Längsträger 2 in den Abschnitt 4 eingebracht, an dem der Längsträger 2 mit dem Stützelement 3 verbunden ist bzw. mittels der Lanze 9 verbunden worden ist. Die Lanze 9 weist jeweils rechts und links von dem Abschnitt 4 - also hier der verformte Abschnitt 4 - des Längsträgers 2 ein umlaufendes Dichtmittel 10 auf, so dass ein lokaler umlaufender Druckraum 11 zwischen der Lanze 9 und der Wand 5 des Längsträgers 2 definiert wird. Dieser Druckraum 11 wird, um die Wand 5 des Längsträgers 2 plastisch zu verformen, über einen Kanal 12 mit einem Druckfluid derart mit einem Druck beaufschlagt, dass sich die Wand 5 des Längsträgers 2 an das Stützelement 3, aber auch an eine durch Niederhalter 13 definierte Ausformung 14 anlegt.

Die Niederhalter 13 definieren mit der Ausformung 14 die Form des Abschnitts 4 der Wand 5 nach der Verformung und damit auch die Art der Verbindung zwischen Stützelement 3 und Längsträger 2. Die Ausformungen 14 sind hier so ausgestaltet, dass sie eine Verformung der Wand 5 über den Innenumfang 7 der Ausnehmung 6 hinaus zulassen, so dass sich die Wand 5 rechts, und links von dem Stützelement 3 umlaufend etwas erhebt. So entsteht zwischen dem Längsträger 2 und dem Stützelement 3 eine drehfeste form- und kraftschlüssige Verbindung, wobei der Formschluss sowohl durch die Auswölbung der Wand 5 des Längsträgers 2 rechts und links von dem Stützelement 3 als auch durch das Profil am Innenumfang 7 der Ausdehnung 6 hergestellt wird.

In den Fig. 1, 2 und 3 ist dargestellt, dass jeweils ein Spiegel 15 auf den Stütz-elementen 3 des Tragmoduls 1 befestigt ist. Auf den mit dem Spiegel 15 in Kontakt stehenden Kanten der Stützelemente 3 ist jeweils ein Trägerblech 16 befestigt, so dass die Auflagefläche für den Spiegel 15 auf den Stützelementen 3 vergrößert wird, wodurch die Befestigung des Spiegels 15, beispielsweise durch Kleben, vereinfacht wird. Um den Stützelementen 3 untereinander eine zusätzliche Stabilität zu verleihen, sind an beiden Flanken der Stützelemente jeweils parallel zu dem Längsträger 2 verlaufende Seitenversteifimgen 17 angebracht. Durch die Seitenversteifungen 17 werden die Flanken der Stützelemente 3 unbeweglich, was der gesamten Konstruktion - dem Tragmodul 1 - aus einem Längsträger 2 und einer Mehrzahl von Stützelementen 3 eine zusätzliche Stabilität verleiht.

Fig. 3 zeigt ein Tragmodul 1 mit einem Längsträger 2 in einer Seitenansicht, wobei an dem Längsträger 2 fünf Stützelemente 3 befestigt sind. Die Befestigung der Stützelemente 3 an dem Längsträger 2 erfolgt dabei - wie zuvor beschrieben - durch plastische Verformung der Wand 5 des Längsträgers 2 in jeweils einem Abschnitt 4, in dem sich jeweils ein Stützelement 3 befindet. Im geschnittenen Bereich in der Mitte der Fig, 3 sind die für die lokale plastische Verformung der Wand 5 des Längsträger 2 notwendigen - temporär eingebrachten - Werkzeuge dargestellt, nämlich die außen angeordneten Niederhalter 13 und die in den Hohlraum 8 des Längsträgers 2 eingebrachte Lanze 9. Die Lanze 9 realisiert mit einem Druckfluid in einem - in Fig. 4 dargestellten - Druckraum 11 einen derart hohen Druck, dass sich die Wand 5 des Längsträgers 2 lokal an die Niederhalter 13 und das Stützelement 3 anlegt, wodurch eine form- und kraftschlüssige Verbindung entsteht. Nach der Verformung werden sowohl die Lanze 9 als auch die Niederhalter 13 entfernt,

Das zuvor beschriebene 'V'erbindungsverfahren hat den Vorteil, dass eine sehr zuverlässige Verbindung zwischen den Stützelementen 3 und dem Längsträger 2 entsteht, die eine sehr hohe Maßgenauigkeit aufweist und vergleichsweise einfach zu realisieren ist. Die Maßgenauigkeit ist bei einem hier vorliegenden optischen System sehr wichtig. Durch dieses Verbindungsvcrfahrcn kann auf Schweißnähte verzichtet werden, und es werden neue Möglichkeiten der Leichtbaukonstruktion eröffnet. Durch die Konstruktionsweise des Tragmoduls 1 kann das Gewicht im Bezug auf bekannte Tragmodule etwa auf die Hälfte reduziert werden. Als Material für das Tragmodul 1, eignet sich besonders ein rostfreier Stahl.

Das in Fig. 1 dargestellte System aus einer Mehrzahl von Tragmodulen 1 wird zur Anwendung derart montiert, dass die Tragmodule 1 um ihre gemeinsame Längsachse - die Mittelachse der Längsträger 2 - schwenkbar gelagert sind, so dass der auf den Tragmodulen 1 befestigte Spiegel 13 - zumindest einachsig - dem Sonnenstand nachführbar ist, so dass stets eine exakte Reflexion der einfallenden Sonnenstrahlen auf ein - nicht dargestelltes - Absorberrohr gewährleistet ist.

## Patentansprüche

1. Tragmodul (1) für ein Spiegelsystem mit mindestens einem hohlen Längsträger (2) und mindestens einem Stützelement (3), wobei das Stützelement (3) auf den Längsträger (2) aufgeschoben und durch plastisches Verformen wenigstens eines Abschnitts (4) einer Wand (5) des Längsträgers (2) im Bereich des Stützelements (3) zumindest kraftschlüssig an dem Längsträger (2) befestigt ist.

2. Tragmodul (1) nach Anspruch 1, **dadurch gekennzeichnet, dass** das Stützelement (3) eine Ausnehmung (6) aufweist, die der Außenkontur des Längsträgers (2) entspricht, so dass das Stützelement (3) auf den unverformten Längsträger (2) aufschiebbar ist, wobei insbesondere das Stützelement (3) als Blechplatte realisiert ist.

3. Tragmodul (1) nach Anspruch 2, **dadurch gekennzeichnet, dass** der Innenumfang (7) der Ausnehmung (6) in dem Stützelement ein Profil 1 aufweist, insbesondere ein zabmförmigesoder wellenförmiges Profil.

4. Tragmodul (1) nach einem der Ansprüche 1 bis 3, **dadurch gekennzeichnet, dass** der Längsträger (2) ein Rohr ist, insbesondere einen kreisrunden Querschnitt aufweist.

5. Tragmodul (1) nach einem der Ansprüche 1 bis 4, **dadurch gekennzeichnet, dass** das plastische Verformen zur Befestigung des Stützelements (3) an dem Längsträger (2) durch einen inneren Überdruck im Hohlraum (8) des Längsträgers (2) erfolgt ist.

6. Tragmodul (1) nach einem der Ansprüche 1 bis 5, **dadurch gekennzeichnet, dass** wenigstens ein Spiegel (15) oder Spiegelsystem umfasst ist, insbesondere der Spiegel (15) oder das Spiegelsystem an dem Stützelement (3) befestigt ist.

7. Tragmodul (1) nach einem der Ansprüche 1 bis 6, **dadurch gekennzeichnet, dass** der Längsträger (2) um seine Längsachse schwenkbar gelagert ist.

8. Tragmodul (1) nach einem der Ansprüche 1 bis 7, **dadurch gekennzeichnet, dass** mindestens zwei Stützelemente (3) vorhanden sind, insbesondere die Stützelemente (3) parallel zueinander ausgerichtet sind.

9. Tragmodul (1) nach einem der Ansprüche 1 bis 8, **dadurch gekennzeichnet, dass** mindestens zwei Längsträger (3) vorhanden sind, wobei das Stützelement (3) jeweils eine Anzahl von Ausnehmungen (6) aufweist, die der Anzahl der Längsträger (2) entspricht, insbesondere zusätzlich mindestens eine Drehlagerplatte an den Längsträgern (2) befestigt ist.

10. System aus wenigstens zwei Tragmodulen (1) nach einem der Ansprüche 1 bis 9, **dadurch gekennzeichnet, dass** die Tragmodule (1) jeweils an einem Ende miteinander verbunden sind, indem insbesondere die Längsträger (2) an jeweils einer Stirnseite miteinander verbunden sind, bevorzugt die Längsträger (2) wenigstens kraftschlüssig miteinander verbunden sind.

11. Verfahren zur Herstellung eines Tragmoduls (1) für ein Spiegelsystem, insbesondere nach einem der Ansprüche 1 bis 9, mit einem Längsträger (2) und mindestens einem Stützelement (3) umfassend folgende Verfahrensschritte:
- Aufschieben mindestens eines Stützelements (3) auf den Längs träger (2),
- Positionieren des Stützelements (3) und des Längsträgers (2) relativ zueinander,
- Beaufschlagen des Hohlraums (8) des Längsträgers (2) mit einem hohen Innendruck, so dass eine plastische Aufweitung des Längsträgers (2) zumindest im Bereich des Stützelements (3) erfolgt und eine zumindest kraftschlüssige Verbindung zwischen Längsträger (2) und Stützelement (3) entsteht.

12. Verfahren nach Anspruch 11, **dadurch gekennzeichnet, dass** der gesamte HobJraum (8) des Längsträgers (2) mit einem inneren Überdruck beaufschlagt wird, wobei an der Außenseite des Längsträgers (2) Niederhalter (13) zur Beeinflussung der Verformung vorgesehen sind,

13. Verfahren nach einem der Ansprüche 11 oder 12, **dadurch gekennzeichnet, dass** der Hohlraum (8) des Längsträgers (2) lediglich partiell an den zu verformenden Abschnitten (4) mit einem inneren Überdruck beaufschlagt wird, insbesondere mit einer Lanze (9), die jeweils rechts und links von dem zu verformenden Abschnitt (4) ein Dichtmittel (10) aufweist.

14. Verfahren nach einem der Ansprüche 11 bis 13, **dadurch gekennzeichnet, dass** zunächst die Stützelemente (3) ausgestanzt werden, insbesondere die Ausnehmung (6) in den Stützelementen (3) mit einem umlaufenden Profil durch Stanzen hergestellt wird.
